(19) Europäisches Patentamt
European Patent Office
Office européen des brevets

(11) **EP 3 222 923 A1**

(12) **EUROPÄISCHE PATENTANMELDUNG**

(43) Veröffentlichungstag:
**27.09.2017 Patentblatt 2017/39**

(21) Anmeldenummer: **16161543.0**

(22) Anmeldetag: **22.03.2016**

(51) Int Cl.:
*F24F 7/013* (2006.01)   *F24F 12/00* (2006.01)
*F24F 7/00* (2006.01)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**
Benannte Erstreckungsstaaten:
**BA ME**
Benannte Validierungsstaaten:
**MA MD**

(71) Anmelder: **Marley Deutschland GmbH
31515 Wunstorf (DE)**

(72) Erfinder: **Siehndel, Rico
31547 Rehburg Loccum (DE)**

(74) Vertreter: **Glawe, Delfs, Moll
Partnerschaft mbB
von Patent- und Rechtsanwälten
Postfach 13 03 91
20103 Hamburg (DE)**

(54) **BELÜFTUNGSSYSTEM MIT WÄRMETAUSCHER**

(57)   Die Erfindung bezieht sich auf ein Belüftungssystem für Gebäude mit einem ersten Wärmetauscher und einem Ventilator in einem Strömungskanal. Erfindungsgemäß wird vorgeschlagen, einen zweiten Wärmetauscher vorzusehen und den Ventilator zwischen den beiden Wärmetauschern vorzusehen. Durch Anpassung der Längen der Wärmetauscher können sie an die Charakteristika des Ventilators angepasst werden.

Fig. 1

**Beschreibung**

Die Erfindung bezieht sich auf ein Belüftungssystem gemäß dem Oberbegriff des Patentanspruchs 1. Ein derartiges Belüftungssystem ist beispielsweise aus der DE 10 2011 080 358 A bekannt.

Das Funktionsprinzip solcher Belüftungssysteme beruht darauf, dass ein Wärmetauscher, meist ein Keramikblock, mit einem bidirektional betreibbaren Ventilator gekoppelt ist. Bei niedrigen Außentemperaturen fördert der Ventilator warme, verbrauchte Innenluft aus einem Innenraum eines Gebäudes durch den Wärmetauscher nach außen, wodurch der Wärmetauscher erwärmt wird. Nach einer vorgegebenen Zeitspanne, meist ca. 70 Sekunden, kehrt sich die Richtung des Ventilators um, und kalte, unverbrauchte Außenluft wird durch den warmen Keramikblock nach innen transportiert. Die Luft wird dadurch erwärmt, frische, erwärmte Außenluft wird dem Innenraum zugeführt, bis sich die Förderrichtung nach der vorgegebenen Zeitspanne wieder umkehrt etc. Auf diese Weise wird eine übermäßige Abkühlung eines geheizten Innenraums durch das Belüften vermieden. Umgekehrt wird bei hohen Außentemperaturen der Wärmetauscher durch die Außenluft erwärmt und diese wird abgekühlt, so das eine übermäßige Aufheizung des Innenraums durch die zugeführt Außenluft vermieden wird.

Ventilatoren, die durch Umkehrung ihrer Drehrichtung die Förderrichtung umkehren können, haben eine Vorzugsrichtung, in der sie bei gleicher Drehzahl und Leistungsaufnahme einen höheren Volumenstrom fördern. Des Weiteren ist zu berücksichtigen, dass die Druckverhältnisse beim Saug- und beim Druckbetrieb unterschiedlich sind. Im Druckbetrieb kann durch Leistungssteigerung des Ventilators ein höherer Druck erzielt werden, der die Luft gegen den Atmosphärendruck durch den Wärmetauscher treibt, während im Saugbetrieb der Atmosphärendruck die Luft aufgrund des vom Ventilator erzeugten Unterdrucks durch den Wärmetauscher treibt, wobei der Unterdruck nicht beliebig vermindert werden kann.

Um bei herkömmlichen reversiblen Ventilatoren gleiche Zu- und Abluftvolumina (Durchsatz) zu erreichen, wird die Drehzahl der Arbeitstakte für Zu- und Abluft unterschiedlich eingestellt. Dies erhöht den Schaltungsaufwand und damit die Kosten, der Ventilator läuft zudem nicht in seinem optimalen Betriebspunkt. Dies gilt auch für die Möglichkeit, statt eines bidirektionalen Ventilators zwei unidirektionale Ventilatoren einzusetzen.

Dementsprechend liegt der Erfindung die Aufgabe zugrunde ein Belüftungssystem der eingangs genannten Art so weiterzuentwickeln, dass ohne erhöhten Aufwand ein gleichmäßiger Durchsatz sowohl für den Zu- als auch für den Abluftbetrieb ermöglicht wird.

Die Lösung dieser Aufgabe erfolgt durch ein Belüftungssystem mit den Merkmalen des Patentanspruchs 1; die abhängigen Ansprüche betreffen vorteilhafte Weiterentwicklungen der Erfindung.

Erfindungsgemäß wird vorgeschlagen, statt eines Wärmetauschers zwei Wärmetauscher vorzusehen und den Ventilator zwischen die beiden Wärmetauschern anzuordnen. Auf diese Weise können die Wärmetauscher abhängig von den Fördereigenschaften des Ventilators gestaltet werden.

Insbesondere können die Luft-Durchströmungswiderstände der Wärmetauscher unterschiedlich gestaltet werden, beispielsweise in dem die Wärmetauscher zwar aus dem gleichen Material bestehen, jedoch unterschiedliche Längen aufweisen.

Alternativ können unterschiedliche Materialien oder Materialstrukturen für die Wärmetauscher gewählt werden, indem beispielsweise Strömungskanäle, die die Luft durch den Wärmetauscher leiten, unterschiedlich dimensioniert sind.

Schließlich ist es auch möglich Drosselelemente, beispielsweise in Form von Filtergeweben oder dergleichen vorzusehen, die mindestens einem der Wärmetauscher zugeordnet sind und den Durchsatz durch den Wärmetauscher vermindern.

Des weiteren ist es möglich, die Drosselelemente als Leiträder auszubilden, deren Luftwiderstand je nach Durchströmungsrichtung unterschiedlich ist.

Da bei dem erfindungsgemäßen Belüftungssystem die Wärmetauscher auf die Eigenschaften des Ventilators im Saug- und im Druckbetrieb angepasst werden können, kann der Ventilator sowohl im Saug- als auch im Druckbetrieb bei gleichem Durchsatz mit derselben Drehzahl betrieben werden. Zusätzliche Schaltungsmaßnahmen entfallen somit.

Da die Wärmetauscher zu beiden Seiten des Ventilators angeordnet sind, ergibt sich eine Schallisolierung ebenfalls zu beiden Seiten.

Häufig ist bei bekannten Systemen der Ventilator an der Außenseite des Belüftungssystems angeordnet. Dies führte dazu, dass die Temperatur des Ventilators beim Ansaugen von kalter Zuluft auf das Niveau der Außentemperatur absinkt und im nächsten Arbeitstakt wieder ansteigt. Da bei dem erfindungsgemäßen Belüftungssystem der Ventilator zwischen den beiden Wärmetauschern angeordnet ist, werden Temperaturschwankungen vermindert, wodurch sich die Lebensdauer des Motors des Ventilators erhöht.

Eine Ausführungsform der Findung wird anhand der beigefügten Figur erläutert. Diese zeigt ein Belüftungssystem im Querschnitt.

Gemäß der Figur ist das Belüftungssystem in eine Gebäudewand 10 eingebaut und verbindet einen Innenraum 11 (links in der Figur) mit der Außenwelt (rechts in der Figur).

In einem Strömungskanal 1, der beispielsweise durch ein Kunststoffrohr oder dergleichen gebildet sein kann, sind in Längsrichtung aufeinanderfolgend ein erster Wärmetauscher 3, ein Ventilator 2 in Form eines Axialventilators, der bidirektional betrieben werden kann, und ein Wärmetauscher 4 angeordnet, wobei die Wärmetauscher 3, 4 unterschiedliche Längen aufweisen. Zwischen dem Ventilator 2 und den Wärmetauschern 3, 4 sind jeweils Strömungsvergleichmäßiger 5, 6 angeordnet. Diese übernehmen eine doppelte Funktion. Sie Vergleichmäßigen die Strömung nach dem Ventilator und stellen so eine gleichmäßige Durchströmung der Wärmetauscher sicher. Die gleichmäßige Durchströmung ist zum Erreichen eines hohen thermodynamischen Wirkungsgrades vorteilhaft. Zusätzlich dienen sie als Leiträder wie sie im Turbinenbau eingesetzt werden, dadurch steigert sich die Effektivität des Ventilators.

In an sich bekannter Weise schließen sich an der Innenseite an den ersten Wärmetauscher 3 ein Filter 7 und eine Innenblende 8 und an der Außenseite eine Außenblende 9 mit einem Grobfilter an.

Durch Pfeile ist in der Figur die Strömungsrichtung angegeben, wenn der Ventilator 2 in seiner Vorzugsrichtung betrieben wird. Der Ventilator baut in seiner Vorzugsrichtung (Pfeile) einen höheren Druck auf. Dieser erhöhte Druck ermöglicht es, die Länge des ersten Wärmetauschers zu vergrößern. Die Länge des zweiten Keramikblocks wird dementsprechend der Längenänderung des ersten Keramikblocks angepasst, um in der Summe die zur Wärmespeicherung optimale Masse und Oberfläche beizubehalten.

Die konkreten Längen der Wärmetauscher können beispielsweise durch einfache Versuche ermittelt werden.

Ein rechnerischer Ansatz beruht darauf, dass sowohl im Innenraum als auch außen Atmosphärendruck herrscht und gleiche Materialien für die Wärmetauscher verwendet werden. Für diesen Fall ergibt sich für ein System mit zwei Wärmetauschern in einem Strömungskanal die Beziehung:

$$L1/L2 = (P1-P4)/(P3-P2)$$

P1: maximaler Druck, den der Ventilator 2 bei Betrieb in seiner Vorzugsrichtung vor einem Wärmetauscher aufbauen kann,

P2: minimaler Druck auf der Saugseite des Ventilators bei Betrieb in seiner Vorzugsrichtung,

P3: maximaler Druck, den der Ventilator 2 bei Betrieb in seiner Nicht-Vorzugsrichtung vor einem Wärmetauscher aufbauen kann,

P4: minimaler Druck auf der Saugseite des Ventilators bei Betrieb in seiner Nicht-Vorzugsrichtung,

L1: Länge des ersten Wärmetauschers,

L2: Länge des zweiten Wärmetauschers. D.h. es gilt P1 > P3 > P4 >P2.

Bei dem System gemäß diesem Ausführungsbeispiel werden durch die unterschiedlichen Längen der Wärmetauscher unterschiedliche Durchströmungswiderstände erzielt. Dies kann auch durch andere Maßnahmen erreicht werden, beispielsweise in dem unterschiedliche Materialien für die Wärmetauscher verwendet werden, in dem bei gleichen Materialien unterschiedlich große Strömungskanäle in den Wärmetauscher verwendet werden oder indem beispielsweise Drosselelemente, die den durch Strömungswiderstand erhöhen, im Strömungskanal angeordnet werden.

**Patentansprüche**

1. Belüftungssystem zum Einbau in eine Gebäudewand mit einem Strömungskanal (1), in dem ein bidirektional betreibbarer Ventilator (2) und ein erster Wärmetauscher (3) angeordnet sind, **gekennzeichnet durch** einen zweiten Wärmetauscher (4) im Strömungskanal, wobei der Ventilator (2) in Strömungsrichtung zwischen dem ersten und dem zweiten Wärmetauscher angeordnet ist.

2. Belüftungssystem nach Anspruch 1, **dadurch gekennzeichnet, dass** die Wärmetauscher (3,4) unterschiedliche Durchströmungswiderstände für Luft aufweisen.

3. Belüftungssystem nach Anspruch 1 oder 2, **dadurch gekennzeichnet, dass** die Wärmetauscher (3, 4) in Strömungsrichtung unterschiedliche Längen aufweisen.

4. Belüftungssystem nach Anspruch 1 oder 2, **dadurch gekennzeichnet, dass** die Wärmetauscher (3, 4) unterschiedliche Materialien und/oder Materialstrukturen aufweisen.

5. Belüftungssystem nach einem der vorstehenden Ansprüche, **dadurch gekennzeichnet, dass** mindestens einem der Wärmetauscher (3, 4) ein Strömungs-Drosselelement zugeordnet ist.

6. Belüftungssystem nach Anspruch 5 **dadurch gekennzeichnet, dass** das Strömungs-Drosselelement als Strömungs-Vergleichmäßiger oder als Leitrad ausgebildet ist.

EP 3 222 923 A1

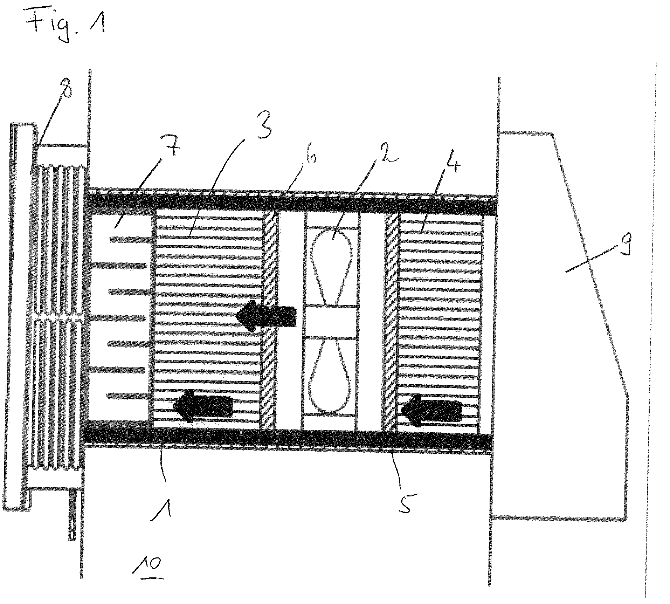

Fig. 1

4

Europäisches
Patentamt

European
Patent Office

Office européen
des brevets

## EUROPÄISCHER RECHERCHENBERICHT

Nummer der Anmeldung

EP 16 16 1543

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | EP 2 325 573 A2 (POLOPLAST GMBH & CO KG [AT]) 25. Mai 2011 (2011-05-25) * Absätze [0027] - [0040] * ----- | 1-6 | INV. F24F7/013 F24F12/00 F24F7/00 |
| X | DE 93 01 812 U1 (KARL-FRIEDRICH PLATE) 13. Mai 1993 (1993-05-13) * Seiten 5-6; Abbildungen 1,4 * ----- | 1-5 | |
| X | DE 198 44 578 A1 (BAUMANN ROLAND [DE]) 30. März 2000 (2000-03-30) * Spalten 3-5; Abbildungen 1-3 * ----- | 1 | |
| X | DE 198 11 469 A1 (REHFUS BERND [DE]; KATTHAGE CARL [DE]) 30. September 1999 (1999-09-30) * Spalte 2; Abbildungen 1-2 * ----- | 1 | |

RECHERCHIERTE SACHGEBIETE (IPC)

F24F

Der vorliegende Recherchenbericht wurde für alle Patentansprüche erstellt

| Recherchenort | Abschlußdatum der Recherche | Prüfer |
|---|---|---|
| München | 22. August 2016 | Blot, Pierre-Edouard |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument

........................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 16 16 1543

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-08-2016

| Im Recherchenbericht angeführtes Patentdokument | | Datum der Veröffentlichung | Mitglied(er) der Patentfamilie | | Datum der Veröffentlichung |
|---|---|---|---|---|---|
| EP 2325573 | A2 | 25-05-2011 | KEINE | | |
| DE 9301812 | U1 | 13-05-1993 | KEINE | | |
| DE 19844578 | A1 | 30-03-2000 | DE | 19844578 A1 | 30-03-2000 |
| | | | EP | 0990859 A2 | 05-04-2000 |
| DE 19811469 | A1 | 30-09-1999 | KEINE | | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102011080358 A